# EUROPEAN PATENT SPECIFICATION

(11) **EP 2 661 039 B1**
(45) Date of publication and mention of the grant of the patent: **20.04.2016**
(21) Application number: 13177649.4
(22) Date of filing: 10.06.2009
(51) Int. Cl.: H04L 27/00, G01S 7/00, G01S 13/76, G01S 13/78, G08G 5/00

(54) **Systems and methods for enhanced ATC overlay modulation**
Systeme und Verfahren für verbesserte ATC-Überlagerungsmodulation
Systèmes et procédés pour une modulation de recouvrement ATC optimisée

(30) Priority: 10.06.2008 US 60385 P
(43) Date of publication of application: 06.11.2013
(62) Divisional of application: 09763571.8
(73) Proprietor: Aviation Communication & Surveillance Systems, LLC, Phoenix, Arizona 85027-4400 (US)
(72) Inventor: Stayton, Gregory, T., Peoria, Connecticut 85383 (US)
(74) Representative: De Anna, Pier Luigi

(56) References cited:
- US-A- 4 161 729
- US-A1- 2004 001 561
- US-A1- 2005 113 040
- US-B1- 6 388 784

## Description

### Field of the Invention

The present invention relates to systems and methods for encoding and modulating digital information, and more particularly, to systems and methods for establishing an alternative data link through multiple modulation of air-traffic-control-related electronic signals.

### Background of the Invention

Travel by aircraft is generally a safe and efficient way for travelers to reach remote destinations. Over the years, as the popularity of air travel has dramatically increased, the need for techniques for safely managing the flow of aircraft has also risen. To address air traffic safety issues, aircraft have been equipped with avionics equipment such as transponders that assist air traffic controllers in identifying, tracking, and managing aircraft in flight.

Through radio frequency transmissions, transponders provide air traffic controllers and other suitably equipped aircraft with information such as aircraft identification, altitude, and other aircraft- specific data. Ready access to such information allows controllers and pilots to utilize airspace in a safer and more efficient manner. As the density of air traffic grows, it is understandable that there is a growing need for more information to be relayed between aircraft and ground stations on a near-real-time basis.

Currently, FAA Air Traffic Control and most other ATC controlling authorities around the world use standard modulation schemes to ensure interoperability of their radio frequency signals with other aircraft and systems. For example, the Minimum Operational Performance Standards for Air Traffic Control Radar Beacon System/Mode Select (ATCRBS/Mode S) Airborne equipment, promulgated by RCTA as RTCA/DO-181C (and incorporated by reference herein in its entirety) defines pulse position modulation on 1090 MHz for Mode S transponder and older transponder (ATCRBS transponders) replies to 1030 MHz ground station and TCAS interrogations. By using standard protocols aircraft state information as well as other data can be relayed aircraft to ground, ground to aircraft, or in some instances aircraft to aircraft. The volume of information that must be transmitted from aircraft continues to increase as more advanced avionics and traffic control systems become available. Likewise, the need to transmit diverse information of all kinds also drives the desire to utilize aircraft systems to send data. However, because of the large number of required transponder replies in heavily travelled areas (such as in the vicinity of an airport, where hundreds of replies per second are generated), there are worldwide limits on the number of transponder broadcast transmissions permitted each second from each aircraft. For example, the limit for Automatic Dependent Surveillance Broadcast (ADS-B) is currently set to 6.2 transmissions per second to prevent the additional ADS-B interference from potentially all the aircraft near a major airport creating a situation where the ATC ground station becomes unable to receive surveillance replies from aircraft in the terminal area being controlled by ATC.

ADS-B squitter data content has already been defined for the most part by industry committees such as SC 186, and there is little remaining room for future growth. In fact, systems currently envisioned and being developed by avionics systems designers will likely need to transmit more data than can be sent within the 6.2 squitters per second limit. The ability to employ more data in avionic systems is now and will continue to be needed.

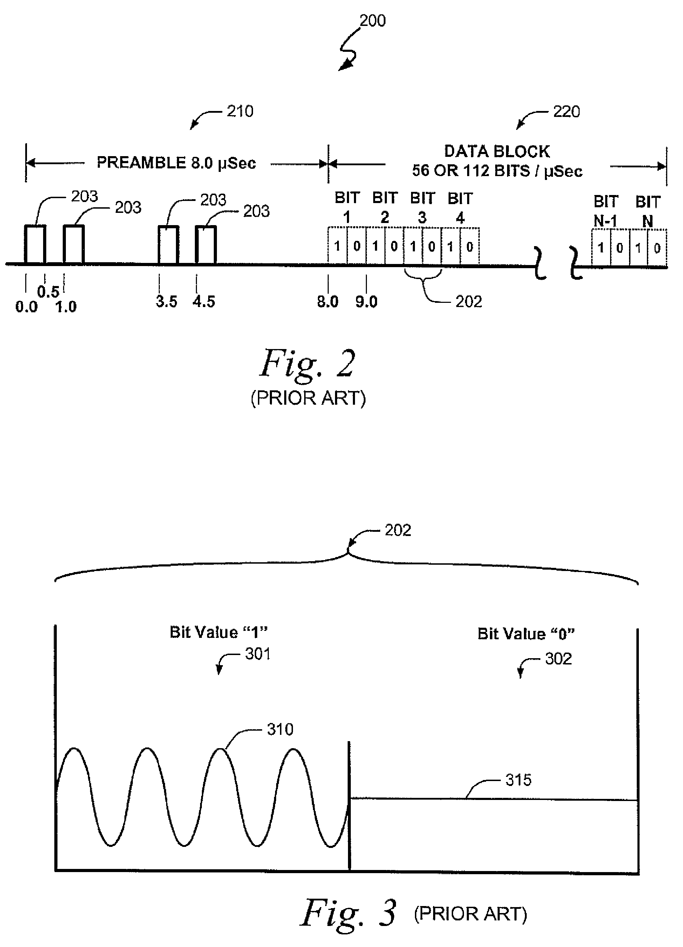

The existing Mode S transponder reply data format (also known as squitters when they are sent unsolicited by an interrogation) is implemented with a pulse position modulation technique, where the position of a pulse determines whether a bit is a one or a zero. Referring to the transmission reply data format and timing diagram 200 in Figure 2, the first four pulses 203 within the 8 microsecond preamble time 210 are called preamble pulses and are used to determine that the pulse position data that follows is for a Mode S reply (or squitter). ADS-B squitters use the long Mode S reply format and thus contain 112 bits in the data block 220 per squitter. In other applications, 56 bits may be transmitted.

Data is transmitted through digital data encoded in the Data Block 220. A bit interval 202 comprises two sub-intervals defining the logical state of a bit symbol. When a pulse is in the "1" sub-interval position (Fig. 3, 301) of a bit interval 202, that bit value is a 1 and when a pulse is in the "0" sub-interval position (Fig. 3, 302) of a bit interval 202, that bit value is a 0. Only one pulse either in a "0" or a "1" position is permitted for each bit interval or bit symbol period (such as bit interval 202) of the entire message shown 200.

Referring to Figure 3, an expanded view of bit interval 202 is shown. A carrier wave in the form of a pulse waveform 310 is being transmitted in the "1" position 301, and no pulse is transmitted 315 during the "0" sub interval, and therefore, this bit interval represents the value of logical "1." Note that the sinusoidal waveform 310 provided in the drawing is for illustration purposes only, and as a standard frequency for ADS-B replies is currently 1090 MHz +/- 1 MHz, approximately 545 cycles of the waveform 310 would normally occur during the 0.5 microsecond sub-interval 301. The phase of the waveform 310 is also unimportant for existing transponder reply standards. What is needed are methods and systems to make more efficient use of transponder reply messages to increase data throughput and provide for additional communication links.
Each of the following documents discloses the method defined by the preamble of claim 1: US 6 388 784 B1, US 2005/113040 A1 and US 4 161 729 A.

### SUMMARY OF THE INVENTION

The invention provides for a method to resolve phase shift within a PSK-encoded carrier as defined by the features of claim 1.

Advantageous developments of this method are defined by the features of the sub claims.

When bits are merged between bit intervals as described in more detail below, it may be appropriate to resolve phase shifts to a desired previous phase by introducing a plurality of small phase shifts. In one aspect of the present invention, a method is provided to resolve phase within a PSK-encoded carrier, the method comprising: determining a desired phase shift to apply to a PSK-encoded carrier; calculating a compensatory phase shift by dividing the desired phase shift by a predetermined number of compensation cycles; and applying the compensatory phase shift to the PSK-encoded carrier for the predetermined number of compensation cycles. The predetermined number of phase shifts may be any desired number to achieve the intended purposes, and may comprise the number of cycles in the PSK-encoded carrier that occur between a first phase shift and a desired resolution point, and in one embodiment, the predetermined number of phase shifts may comprise a predetermined constant value. The compensatory phase shift may be applied to the PSK-encoded carrier on consecutive, nonconsecutive, or inconsistently occurring spaced cycles of the PSK-encoded carrier. The compensatory phase shift may also be applied to the PSK-encoded carrier on a predetermined frequency such as every tenth cycle of the PSK-encoded carrier.

The accompanying drawings, which are incorporated in and constitute a part of this specification, illustrate several embodiments of the invention and together with the description, serve to explain the principles of the invention.

### BRIEF DESCRIPTION OF THE DRAWINGS

Figure 1 illustrates a block diagram of an embodiment of a system for enhanced ATC overlay modulation not belonging to the present invention.
Figure 2 illustrates a standard prior art transponder reply data format and timing diagram.
Figure 3 depicts an expanded view of an exemplary bit interval of the reply data format, with a logical data value "1" pulse encoded not belonging to the present invention.
Figure 4 shows one bit interval of modulated ATC signal with overlay data not belonging to the present invention, where the carrier has been phase shifted ninety degrees, the phase shift occurring at or near the beginning of the bit interval.
Figure 5 shows one bit interval of modulated ATC signal with overlay data not belonging to the present invention, where the carrier has been phase one hundred eighty degrees, the phase shift occurring approximately at the midpoint of a carrier within a sub-bit interval.
Figure 6 shows one bit interval of modulated ATC signal with overlay data not belonging to the present invention, where the carrier has been phase shifted ninety degrees, and frequency drift has affected the carrier.
Figure 7 illustrates one and one half bit intervals, illustrating a merged carrier signal from a bit value of 0 from a previous bit interval, and a bit value of 1 from a following bit interval with midpoint one hundred eighty degree phase shifts not belonging to the present invention.

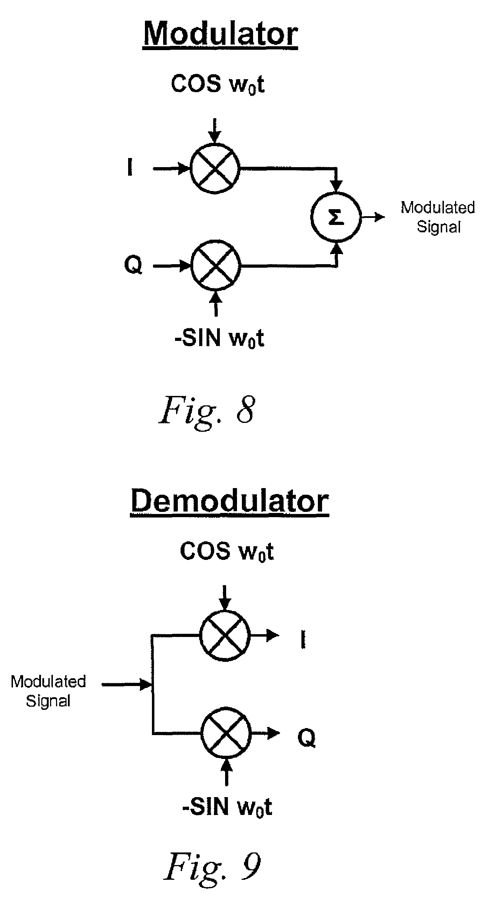

Figure 8 shows an exemplary modulator not belonging to the present invention.
Figure 9 illustrates an exemplary demodulator not belonging to the present invention.
Figure 10 shows a constellation diagram and corresponding Gray Code symbol assignments for an 8-PSK modulation scheme not belonging to the present invention.
Figure 11 shows a merged pulse scenario whereby a 180 degree phase shift in a waveform occurs in a leading sub-interval.
Figures 12-14 illustrates an embodiment of the invention utilizing a phase transition approach to minimize impact on spectral performance for merged pulse phase shifts.
Figure 15 illustrates an embodiment not belonging to the present invention utilizing a technique to double data rates through bit interleaving.
Figure 16 illustrates an embodiment not belonging to the present invention whereby a signal waveform is modulated with multiple phase changes per bit sub-interval to further increase data rates or error correction/detection capability.
Figure 17 shows a carrier signal encoded with differential phase shifts modulated in accordance with embodiments not belonging to the present invention.
Figure 18 shows a PSK-modulated carrier's signal encoded with differential phase shifts modulated in accordance with embodiments not belonging to the present invention. Figures 19A-19D illustrate an embodiment not belonging to the present invention using delta phase transition modulation to assign logical symbols to certain orders of phase transitions.

### DESCRIPTION OF THE EMBODIMENTS

Reference will now be made in detail to the present exemplary embodiments of the invention, examples of which are illustrated in the accompanying drawings. Wherever possible, the same reference numbers will be used throughout the drawings to refer to the same or like parts.
Embodiments of the present invention provide methods for overlaying additional data on top of existing ATC data without affecting existing ATC transponder / TCAS / Ground Station / Multilateration or other existing equipment. Embodiments of the present invention may use any form of modulation overlaid on top of existing ATC data, and depending on implementation, the overlaid data may be undetectable by equipment that processes legacy ATC signals. This permits the use of existing equipment within the ATC environment, and the use of new equipment that can be either backwards compatible and/or independent of ATC existing data formats permitting more data throughput efficiency using the same ATC bandwidth and frequency assignments of 1030 and 1090 Mhz. Embodiments of the present invention utilize a transponder reply data format and timing diagram similar to that shown in Figure 2. However, as discussed in more depth below, embodiments of the present invention provide additional modulation within each pulse interval 202 that may not be detected by existing ATC equipment or methods, but can provide additional data bits within the same reply.

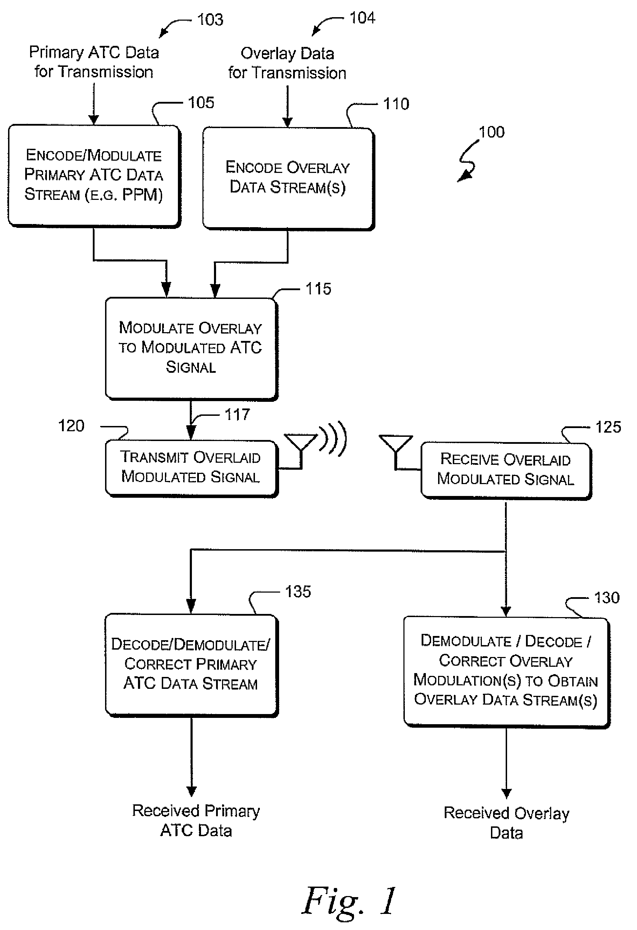

Turning to Figure 1, a block diagram 100 illustrates an embodiment of a system not belonging to the present invention. A primary ATC data stream 103 is input to an encoder and modulator 105 that produces a modulated signal (such as by pulse position modulation) that complies with existing standards such as an ADS-B squitter or reply transmissions (see, e.g., Figure X). Data 104 that is desired to be transmitted through an overlay data link is encoded 110, if desired, with information such as parity bits, CRC (cyclic redundancy check) codes, encryption keys, or any other information or encodings that are desired to be applied to the overlay data. The encoded overlay data is then further 115 modulated into the modulated ATC stream 115 in a manner that provides a reply/squitter signal that is compatible with existing hardware yet contains information in excess of that defined by current transponder standards. One exemplary method to achieve such overlay modulation compatibility is to initially modulate the ATC signal with a pulse position modulation that is acceptable by currently deployed hardware, and then apply the overlay modulation with a technique such as phase shift keying "PSK." PSK is a digital modulation scheme that conveys data by changing, or modulating, the phase of a reference signal (e.g., the carrier wave), as opposed to selectively applying a pulse to bit symbol times as is utilized in pulse position modulation. Since varying the phase of the carrier signal within each defined time frame in an ATC-encoded reply signal does not impact the ability of legacy hardware to decode the original ATC data message, the PSK modulation is nondestructive and may be independently demodulated. Put another way, the twice-modulated signal 117 carries the ATC data 103 that is modulated and directly decodable by conventional PPM techniques, in addition to additional data 104 that has been overlaid on the modulated signal in a nondestructive manner, such as by PSK modulation.
The modulated signal 117 may then be transmitted 120 and received by a receiver 125 that is configured to receive ATC transponder reply transmissions (such as a ground station or another transponder in a suitably equipped aircraft). In various embodiments, the transmitter 120 and the receiver 125 may comprise any electronic equipment capable of sending and/or receiving RF signals, including, but not limited to ATC radars, TCAS transponders, ADS-B transponders, and ground stations of any type. In one embodiment, ADS-B ground stations can receive and transmit ATC Overlay messages on top of various outputs such as Traffic Information Service Broadcasts (TIS-B, Automatic Dependent Surveillance Re Broadcasts (ADS-R).
The received signal is then demodulated 135 by PPM demodulation 135 to recover the original primary ATC data 103 after any necessary decoding. The received signal is also demodulated 130 to obtain the overlay data 104, which may be presented in several channels after any necessary decoding. Therefore, the twice-modulated signal 117 may be demodulated with multiple techniques independently and each data stream (103, 104) respectively independently recovered.
Any form of modulation may be overlaid on top of any ATC-modulated signals, whether such modulation currently exists or is created at a future date. In alternate embodiments, additional data may be overlaid by modulation on top of an overlaid modulation as well, and this modulation is not limited to modulation that is undetectable by existing equipment. Further, the modulation is not limited to 1090 MHz squitters and replies, but can also be used on 1030 MHz (currently interrogation by radars and TCAS), on the General Aviation UAT transceiver UHF frequency band, ATC HF, VHF and UHF voice and data bands, on the VDL Mode 4 ADS-B modulation used for ADS-B in limited locales within Europe, DME; SATCOM; or any other avionics equipment that radiates a modulated RF signal and at baseband for ATC terminal or other networks currently sending data over landline or microwave links. Thus any form of ATC modulation that is used can have an overlaid modulation applied to it at any frequency. This can also include, for example, overlaid modulation on a modulation applied to Air Transport airborne weather radar for communication links. Therefore, embodiments of the present invention provide that any overlay modulation type (whether interfering in some manner or not) may be overlaid on or added to or encrypted with any modulation type for whatever purpose desired, such as, but not limited to ATC applications, any commercial data relay purposes, low probability of intercept applications, low probability of detection techniques, low probability of spoofing purposes, and encryption.

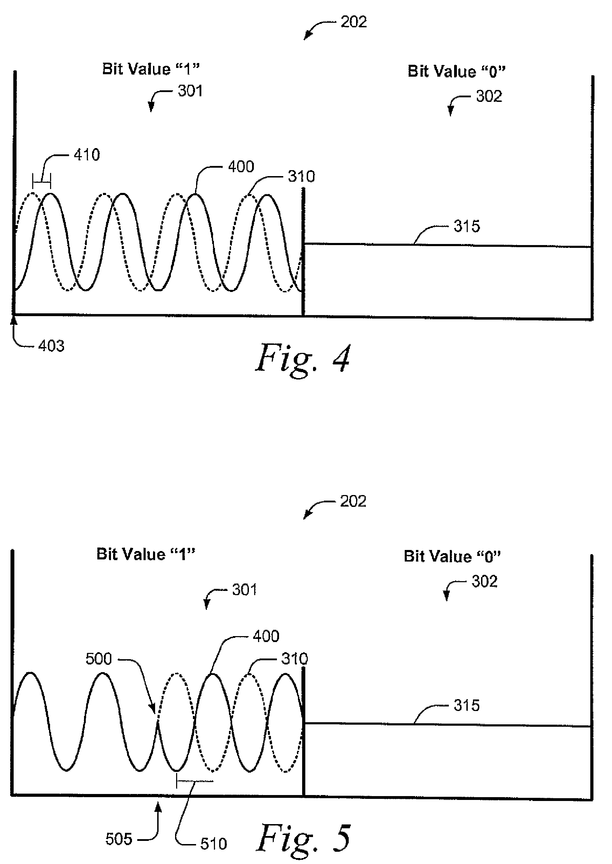

Embodiments may employ phase shift keying (PSK) modulation within each of the 112 bit pulses in the data block 220. Turning to Figure 4, an expanded view of one exemplary bit interval 202 of the data block 220 is shown, with an ATC data value of logical "1" (carrier pulse 400 is present in "1" sub-interval position, 301) and the phase shifted carrier signal 400 is overlaid with phase modulation by phase shift 410 of ninety degrees. The phase shift in this embodiment occurred at or near the beginning 403 of the logical "1" sub-interval position 301. The original unshifted carrier signal 310 is shown for comparison. Depending on the particular PSK implementation, this phase shift may correspond to one bit or several bits of overlay data. Note that the sinusoidal waveform 310 provided in the drawing is for illustration purposes only, and as a standard frequency for ADS-B replies is currently 1090 MHz +/- 1 MHz, approximately 545 cycles of the waveform 310 would normally occur during the 0.5 microsecond sub-interval 301. As the applicable ATC standards do not care about the phase of the carrier wave, the presence of an acceptable frequency and amplitude waveform in the appropriate bit sub-interval position 301 is all that is needed to provide the logical "1" originally encoded.

Phase information can then be sent with a differential phase between each pulse representative of a plurality of states used to represent a plurality of bits. Each phase difference is detected by examining the phase of a previous pulse to the phase of the next pulse to eliminate the effects of relative aircraft motion. For the first phase reference pulse relative to Bit 1 case, any of the preamble pulses 203 may be used, and from then forward each previous bit pulse phase can be used as the reference for the next bit phase.

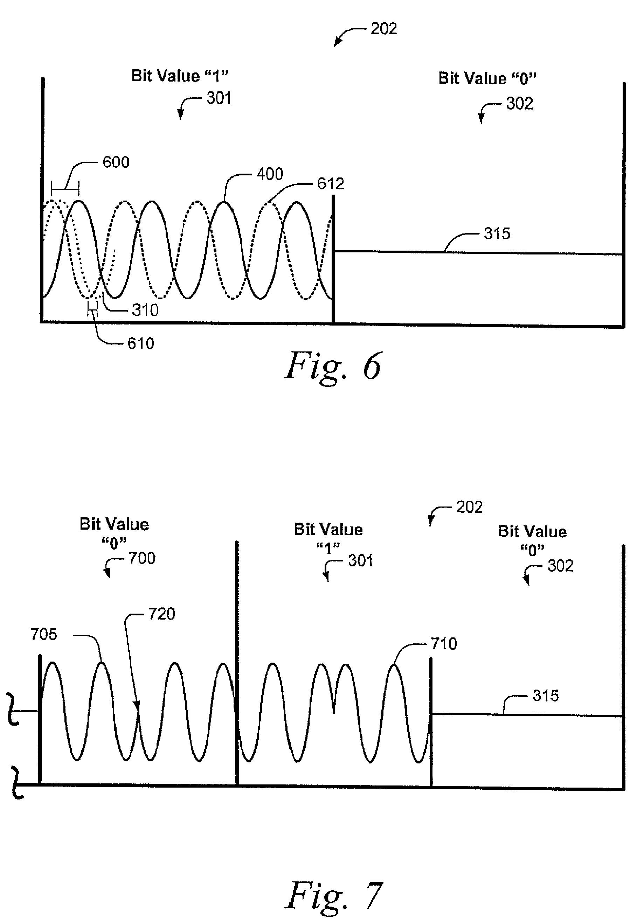

Other PSK methods can be used to send data such as a synchronous transmission of phase, where comparison to a reference that is synchronized in phase to the incoming reply signal modulation is used to determine a phase value for each pulse. The preamble pulses of the Mode S reply message can be used to synchronize a reference oscillator source to the incoming message RF signal using, for instance, a phase-locked-loop oscillator or a Costas loop that can be locked to the incoming signal phase and frequency, which is then used as a phase reference for all the data bits. In legacy ATC systems, the frequency of the signal being transmitted are in the range of 1090 MHz plus or minus 1 MHz, and drift of the phase of the carrier signal is generally not of concern provided the signal envelopes within predetermined timing intervals is within established ranges, such as those set forth in RTCA standard DO-181C. To recover a phase shift encoded within the broadcast carrier signal, embodiments of the invention provide for obtaining the data phase by synchronous or asynchronous means. Turning to Figure 6, original carrier 310 (shown only partially for clarity) would have undergone a frequency drift 610, producing a new drifted-phase carrier 612. Without knowledge of the amount of drift 610, the exact phase of the phase-shifted carrier 400 may be difficult to determine. In one embodiment, phase drift 610 is accounted for via phase synchronous means but with the frequency asynchronous, for instance by utilizing an integrator and accumulating and storing the phase drift as a phase error signal that can be subtracted out from the phase of the current signal. In another illustrative embodiment, after a predetermined amount of data pulses are received (for instance 7 pulses), a local oscillator tracks the received signal via a Costas loop, allowing frequency and phase synchronization. The local oscillator is then driven with an offset frequency to maintain synchronization. Through this approach, interfering signals with different frequencies can be distinguished through use of a matched filter, and through use of matched filters with synchronized frequency and phase, noise performance can be improved significantly, for instance by about 3 db.

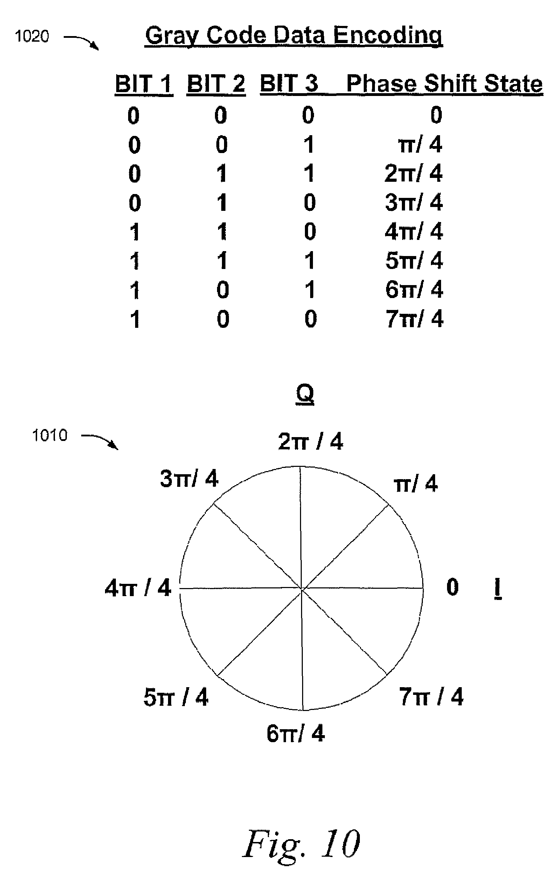

Aircraft motion and signal-to-noise-ratio, as mentioned above, may be taken into account when determining an acceptable bit error rate (BER). For instance, if two aircraft, one transmitting a reply and the one receiving the reply are traveling towards one another at a rate of 1200 knots, which is 2000 ft. per second, the relative velocities can significantly affect the phase error seen by the receiving aircraft. Since the wavelength in free space is about 1 foot at ATC 1030 MHz and 1090 MHz frequencies, a phase error of about 2000 ft./sec. X 360 degrees phase X 112 microseconds (112 x 10<"6> seconds per Mode S reply message length) = 80 degrees phase error. Since the 80 degrees of error is spread over the entire Mode S message and each phase can either be differentially compared from the previous to the next bit or synchronized out as described above, the phase error between each bit then is about 80 degrees / 112 bits per microsecond = 0.71 degrees phase error per bit. Thus, any encoding scheme that can tolerate a phase error of 0.71 degrees between each bit is realizable, but is also affected by the signal to noise ratio to accurately measure phase. For a reasonable signal to noise ratio that exceeds 10 db, a PSK encoding scheme that provides 360 states or 1 degree per state could be tolerated. Usually a power of two is used for binary encoding, so 256 (2<8>) states could be used to provide 8 bits of data per PPM pulse. To decrease the effects of noise on signal to noise ratio, embodiments of the present invention use a D8PSK (Differential 8-state Phase Shift Keying) modulation scheme. Referring to Figure 10, each of 8 states is shown from 0 degrees through 360 degrees with each state separated by 45 degrees representing 3 bits. This provides 112 bits X 3 = 336 bits per message additional to the 112 bits of the original Pulse Position Modulation (PPM) Mode S reply message. Thus, if an additional 3 bit message is sent for each of 6.2 squitters per second, a total of 336 bits per message X 6.2 messages = 2083 additional bits can be sent via the overlay modulation. Therefore, by modulating each pulse-bit whether in the zero or one position, with D8PSK modulation, a new data link is then created with 3 bits of data for every previous PPM bit. In one embodiment, the new data link would not be detected by existing ATC TCAS and transponder equipment unless it is equipped to detect the D8PSK modulation, ensuring backward compatibility with existing systems.

In various embodiments, states can be encoded to reduce the number of bit errors per symbol. Other schemes using additional parity bits to produce symbols that are completely orthogonal can be used to provide additional interference immunity.

In alternate embodiments, modulation schemes providing more bits per second such as DI 6PSK (4 bits per message bit) or D32PSK (5 bits per message bit) can be used depending on the amount of noise immunity versus data rate required. Secondary modulation schemes may also be used in conjunction with error correction and control schemes in order to minimize bit error rate and correspondingly increase signal to noise ratios in noisy environments. Also, bits can be encoded into states that only permit one bit change per adjacent state change (Grey Code). This can reduce bit errors to only one bit for changes between adjacent states and helps with noise and interference immunity, as discussed later.

Additional techniques can be used to minimize frequency spectral power effects or bandwidth required to accommodate the additional modulation. For instance, when two pulses are positioned next to one another, such as shown in Figure 7, and in the case of a sudden change in phase 720 in the first pulse 705 to a different phase in the next pulse 710, an amplitude notch may occur between pulses affecting the bandwidth of the reply. However, if the phase is slowly varied between the middle of the first pulse to the middle of the second pulse, the phase variation occurs over a greater time period and the amplitude notch can be made to be very small, permitting compliance to existing bandwidth requirements for Mode S replies and having no effects upon existing equipment in the field. The phase information can then be read in the beginning of the pulse for the first bit interval (before any phase changes to the next pulse) and near the end of the second pulse for the second bit interval (after a phase change from the first to the second pulse is complete) when two pulses have merged into one, permitting the use of this MSK (Minimum Shift Keying)-type phase change technique.

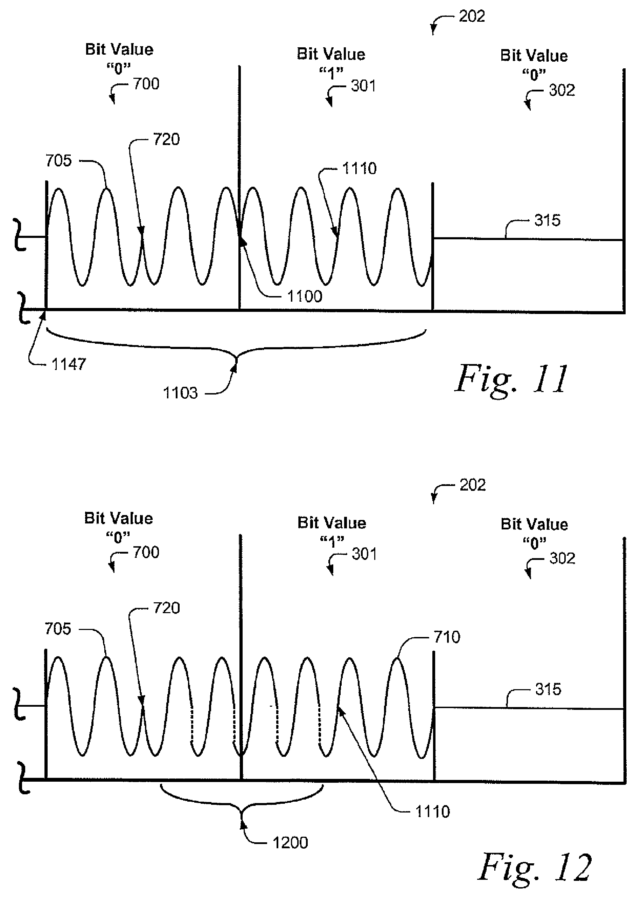

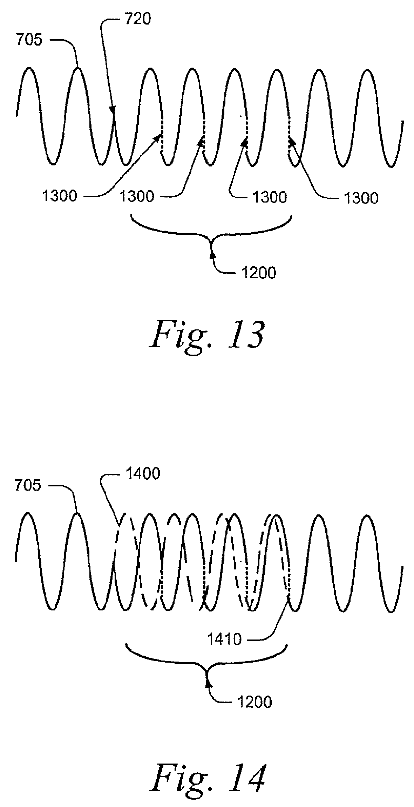

Turning to Figures 11-14, a visual representation of a phase resolution approach is shown. In this illustration, the previous logical bit "0" sub-interval 700 has merged with the logical "1" bit sub-interval 301 of the following bit interval 202, creating a merged pulse 1103. The 180-degree phase transition 720 causes the carrier wave to become 180 degrees out of phase at the beginning 1100 of the following bit interval 202, compromising spectral performance. The phase transition 720 is shown in approximately the middle of the sub-interval 700 for ease of illustration, but the transition may occur at any point within the sub-interval 700, including at the beginning 1147 of the bit sub-interval 700; preferred embodiments may permit phase changes only at the beginnings of bit sub-intervals and/or may permit only small phase changes (such as 45 degrees) at other locations within bit sub-intervals to reduce impact on spectral performance. Figure 12 illustrates an approach to resolve the phase change in a manner that minimizes impact on spectral performance. A phase resolution period 1200 is defined within the merged pulse, and in one embodiment, may span the end of one bit-sub interval 700 and the beginning of the following bit sub-interval 301, although the phase resolution period may reside at any desired location in the merged pulse. During the phase resolution period, a small phase change (Figure 13, 1300) is introduced in several cycles of the waveform 705, progressively shifting the waveform back to the original phase of the carrier signal (or any other desired phase). Although four 45-degree phase shifts 1300 are shown in Figure 13 in consecutive cycles to resolve an upstream 180 degree phase reversal, the phase transitions 1300 in the resolution period 1200 need not be consecutive, or evenly divided. For example but not by way of limitation, assuming a sub-interval bit period of 0.5 microseconds, the phase could be progressively adjusted in a 400 nanosecond phase resolution period that is spread across the bit interval threshold (e.g. 200 nanoseconds before, and 200 nanoseconds afterwards). By further way of example, if a 180 degree phase shift (a worst case scenario in the spectral performance sense) had taken place taken place in the first part of the merged interval, a slight phase change may be introduced in the waveform every 10 nanoseconds during the 400 nanosecond phase resolution period, so that 180 degrees / 40 changes produces 4.5 degrees of phase change per phase shift. In this example, once each 10th cycle in the phase resolution period the waveform is shifted by 4.5 degrees, the original phase of the waveform is restored prior to the mid-interval point of the following bit sub-interval, allowing a new phase change to be produced. Figure 14 illustrates such a gradual transition of the waveform 705 to the original carrier phase by the end 1410 of the phase resolution period 1200 (the original phase is shown in dashed lines 1400 for comparison). These approaches also can be adapted for significant or multiple intra-sub-interval phase shifts, if embodiments provide for multiple phase shifts per sub-interval.

Additional modulation types with varying degrees of BER, detection gain, and bit throughput can be used. These include, but are not limited to: general phase shift keying modulations; binary phase shift keying modulation (BPSK); quadrature phase shift keying modulation (QPSK); 8-phase shift keying modulation (8-PSK); differential phase-shift keying (DPSK); DNPSK modulation, where N is an even integer and a multiple of 2; frequency shift keying (FSK); amplitude shift keying (ASK); quadrature amplitude modulation (QAM); orthogonal frequency-division multiplexing (OFDM); minimum- shift keying (MSK); asymmetric phase-shift keying, (APSK); pulse position modulation (PPM); amplitude modulation (AM); frequency modulation (FM); or any other modulation form using amplitude, phase, or frequency signal characteristics and methods of use; and combinations of modulation techniques.
In principle, any modulation type can be used, but should be constrained to meet DO- 181C amplitude and spectral requirements such that existing ATC equipment is not affected, but new equipment can transmit and detect the overlaying modulation. In addition, some form of bit error detection and correction can be used such as that presented in RTCA DO- 181C, Mode S Minimum Operational Performance Specification, and RTCA DO- 185 A, TCAS Minimum Operational Performance Specification, as an example to improve message reception.
A more suitable means of bit error detection and correction for Phase Shift Keying modulation can, for example, include the use of additional bits to provide orthogonal symbol (cross correlation is zero for one bit errors) encoding with zero correlation between symbol sets (bit patterns between symbols are significantly different by several bit states). For example, the bit values can be represented, as shown below in Table 1 (for two bits to simplify the discussion). Note that this method may require that more bits be used within each symbol to represent the lesser number of bit values (or states), so that a more unique bit pattern is transmitted and received, and can be corrected in the presence of noise or interference with a higher degree of certainty.

**Table 1**

| **Bit Values** | **Symbol Data** |
|---|---|
| 00 | 0000 |
| 01 | 0101 |
| 10 | 1100 |

Another embodiment not belonging to the present invention addresses limiting the effect of burst errors, such as for a single interfering pulse where the "BIT 1" pulse position of the Mode S reply has been overlaid by a stronger in amplitude interfering pulse. This situation could destroy an entire 3 bit symbol for the case of D8PSK (3 bits per symbol). However, if each D8PSK bit value is sent as only one bit of 3 separate messages, then only one bit of each message may be affected, making it possible for 2 of the messages to remain uncorrupted. For example, from Table 1, the last bit of the Symbol Data for Bit Value 10 could be corrupted into a 1, resulting in the sequence from Table 1 to be a 1101 instead of a 1100. Then, the 1101 is incorrect, since it is not a valid symbol and by knowing which bit has been corrupted from the interfering pulse position it is possible to determine that 1100 is the correct symbol for a one bit error, since none of the other symbols are of the form "11XX".

Non-ideal communications channels, noise, atmospheric conditions, interference, or other phenomena may induce errors into the message being communicated, whether or not the transmitted message has been overlaid with additional encoded information. In various embodiments of the present invention, conventional error reduction or correction approaches may be applied to reduce bit error rate, such as utilization of a parity overlay or CRC check scheme as described in RTCA/DO-181C, Reed-Solomon bit error detection and correction, or other error conventional detection and correction schemes.

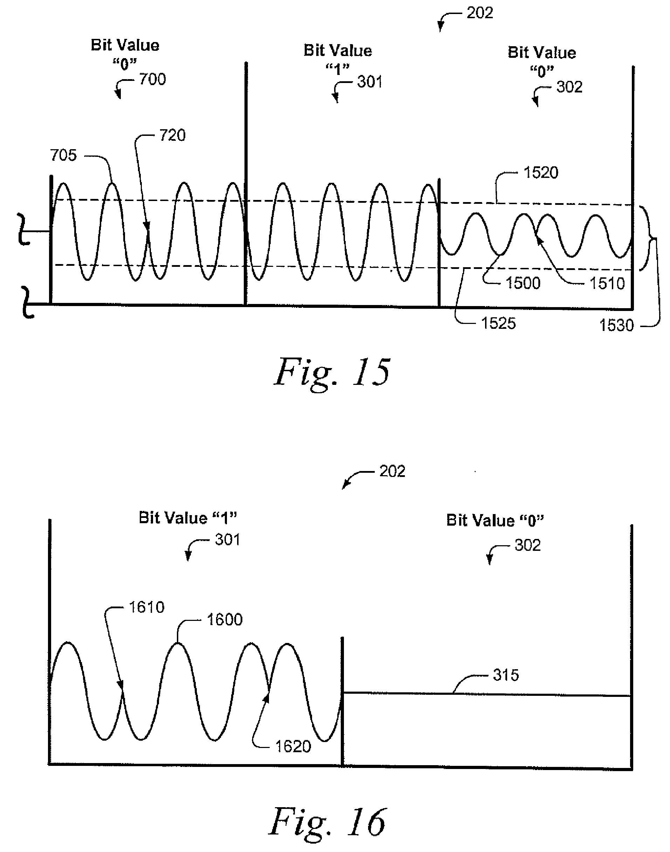

Embodiments include the use of a Gray-Code for each phase state transmitted which is most useful for the case where an interfering pulse is near to the same amplitude as the data pulse and cannot be detected, use of a four bit message symbol where only one parity bit is used for every three message bits to detect and correct single bit errors (as opposed to traditional 8 bit symbols where half the bits are parity bits), interleaving of message bit symbols to limit the number of errors per message symbol due to sequential interfering pulses so that most errors can be corrected (after de-interleaving) by changing the state of a single bit, and using a parity overlay encoding scheme on top of the last 24 bits of the address of the intended recipient for point to point messaging or with an all ones address for broadcast messages as is done now for Automatic Dependent Broadcast messages (ADS-B) as described in RTCA DO-260A ADS-B MOPS in conjunction with the error detection and correction algorithm as described in RTCA DO- 185 A TCAS MOPS. Alternate embodiments provide methods for bit error detection and correction, and may be more efficient in terms of the number of phase message bits that can be corrected per each 112 bit PPM Mode S reply. Turning to FIG. 15, another embodiment not belonging to the present invention is illustrated tc provide for increasing bandwidth by interleaving bits within the "pulse" and "no-pulse" sub- intervals of defined bit intervals. Waveform 705 is shown spanning the end of a logical "0" bit sub-interval 700 and the logical "1" bit sub interval 301 of the succeeding bit interval 202. A predefined minimum threshold level 1530 is defined for an upper signal bound 1520 and lower signal bound 1525. In legacy equipment, signals having insufficient amplitude to cross the upper and lower minimum threshold boundaries 1520, 1525, are rejected as noise. However, in one embodiment of the present invention, a carrier signal 1500 is suitably modulated within a sub- interval of the bit interval 202, in a manner in which is not intended to be sensed by pulse-position-based legacy equipment 302, for instance, by using an amplitude not sufficient to pass the minimum threshold boundaries 1520, 1525, but of sufficient amplitude to be reasonably likely to be distinguishable from noise. The lower-amplitude signal 1500, while being rejected by legacy equipment, may be detected using methods of the present invention, demodulated (for instance, by an 8-PSK modulation protocol), and data extracted. In this manner, data may be transmitted in the periods defined by PPM techniques as having no pulse present. Those of skill in the arts recognize that any suitable modulation may be applied during the no-pulse sub- interval (shown here as 302) of a bit interval 202. Further, variations of these embodiments provide for interleaving of data within preamble segments of message blocks, allowing for an alternate preamble or for additional data to be transmitted.

Turning to FIG. 16, an embodiment not belonging to the present invention is illustrated, whereby multiple phase shifts are introduced 1610, 1620 into one bit sub-interval 301. The 180 degree phase shifts shown are for illustrated as such for clarity, but in certain embodiments, it would be desirable to restrict the maximum allowable phase changes to some lower figure (for example, between 0 degrees and 135 degrees) to minimize impact on spectral performance characteristics. To implement such an approach where a plurality of phase transitions is utilized within one sub-interval, a phase-quantization assignment may be utilized wherein only a subset of available phase transition angles (such as zero degrees to 135 degrees) may be utilized to improve performance. For example, but not by way of limitation, in an 8-PSK system, the quantization assignments could be made at phase angles of 0, 19, 38, 57, 76, 95, 114, and 135 degrees. Other quantization assignments or state configurations are possible in alternate embodiments.

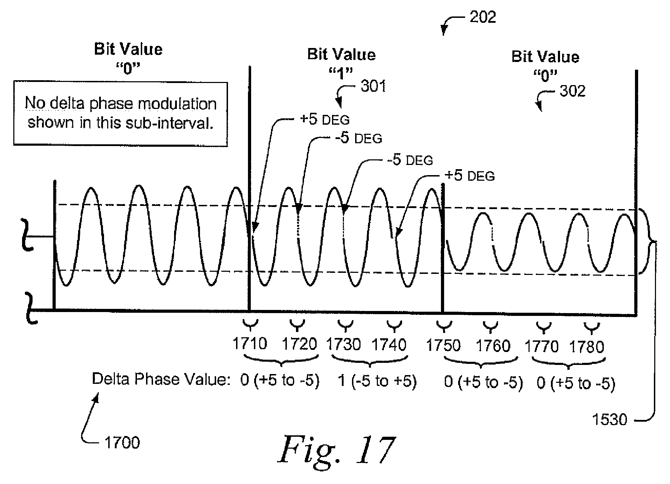

Those of skill in the relevant arts also appreciate that several of the embodiments may be combined to achieve enhanced data rates, reduced error rates, or a combination of those two criteria. For example, but not by way of limitation, bit interleaving techniques may be combined with multiple phase transitions per bit sub-intervals to quadruple (or more) the data rates available in the PPM-based ATC systems described herein.
Turning to FIGS. 17-19, a modulation overlay method is illustrated that utilizes a delta phase modulation that may be combined with previously modulated signals. In this implementation, small phase changes are introduced into a carrier waveform in a complementary manner; that is, pairs of phase changes are introduced that when added together create a zero net phase change to the carrier signal. However, these small phase changes may be encoded and correlated with time intervals to allow an already-modulated waveform (or alternatively, an unmodulated carrier), to be encoded with data in a nondestructive manner. Consistent with other embodiments discussed previously, embodiments of delta phase modulation may be used with ATC signals such as ADSB squitters, TCAS signals, or the like, in a manner that may be compatible with legacy equipment (that is, they are merely ignored by avionics not incorporating the present invention) but may convey additional data to newer equipment that is properly configured to demodulate the overlaid data.

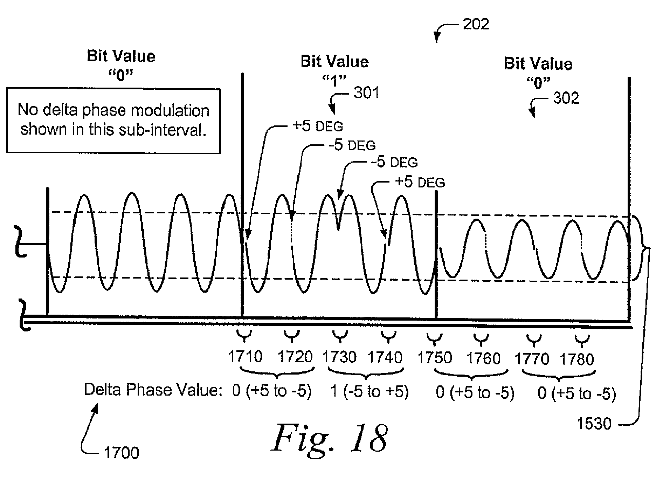

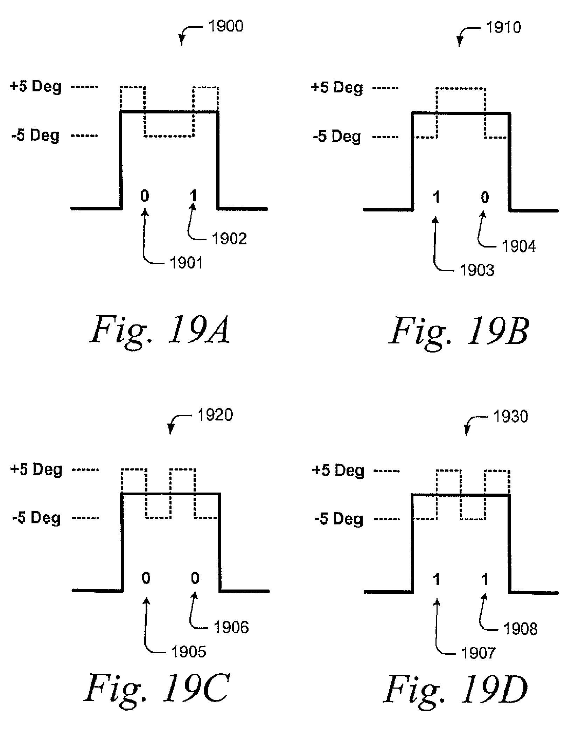

An embodiment not belonging to the present invention correlates a delta phase transition from - 5 degrees to +5 degrees to a logical symbol value of "1" value and a delta phase transition between +5 degrees and - 5 degrees is a logical symbol value of "0" value. Referring to FIG. 19A, during a predefined time period 1900 (such as a bit interval or a sub-bit interval), a number of small phase transitions are introduced to encode a "01" symbol within a waveform. A +5 degree transition is followed by a -5 degree transition (defining the first "0" value, 1901), and then a -5 degree transition followed by a +5 degree transition defines a logical "1" value 1901. Alternative symbol-phase transition assignments may be utilized, including using a +5 to -5 degree phase shift sequence to indicate logical "1," and a - 5 to +5 phase shift sequence to indicate logical "0". As each positive phase shift is accompanied by an equal but opposite sign phase shift, the net phase shift effect is zero, which allows for this modulation scheme to be used in conjunction with other phase-shift approaches such as nPSK. Further, in legacy ATC equipment, the +/- 5 degrees appears as noise that can be filtered out; however, to a receiver that can detect this new modulation the delta change in phase between +5 degrees and -5 degrees is 10 degrees provides more noise margin than only detecting a 5 degree change. FIGS. 19B, 19C, and 19D respectively also illustrate symbols encoded with this modulation of "10," "00," and "01". Those of skill in the communication arts understand that the phase shifts may also be interleaved across symbols and/or bits, which will increase the immunity to noise pulses especially when considering the additional aspect of the use of time slots to coordinate differential phase shifts. Referring to FIGS. 17 and 18, encoded carriers are shown with differential phase shifts modulated in accordance with embodiments not belonging to the present invention. Within a bit sub- interval (e.g., 301) a carrier is broken into four time intervals, and small phase shifts are introduced in respective time slots 1710, 1720, 1730, 1740. In slot 1710, a +5 phase shift is introduced, followed by a -5 degree phase shift in slot 1720 (defining a logical symbol value of "0") and in slot 1730, a -5 degree phase shift is followed by a +5 degree phase shift in slot 1740 (defining a logical symbol value of "1"). Those of skill in the communication arts also recognize that together, the {+5, -5, -5, +5} phase shift vector could also be assigned to a logical symbol value such as "01", and using different size phase shifts (for instance +10 degrees or -10 degrees), broader phase vector-symbol mappings may be achieved.
Restricting the differential phase shifts to predefined time slots (e.g. 1710, 1720, 1730, and 1740) confers additional benefits such as the ability to improve immunity to noise. If a bit is encoded for instance, not over consecutive phase transitions but over periodic transitions (e.g. every other transition), the net effect on phase remains zero, but the likelihood of a recovery of the encoded phase from a noise-affected received signal is increased. In the case of ATC signals such as ADSB squitters, bit-interval times are defined (e.g. by preambles), so differential phase transitions can be accordingly synchronized to desired time slots. Put another way, if a +5 phase shift occurs in the proper time slot for the first bit and a -5 occurs in the proper time slot for the second bit which can also be determined by a delta method between the two bits, then the entire waveform can be determined and the states of the two bits can thus be determined. Therefore, if interference or noise causes a loss of some of the phase information, the proper values for the bits can still be determined with partial information approximately 50% of the time. Also, by adding another possible set of phase values such as +/-10 degrees for the transitions a third bit can be added. Thus it is possible to increase the bandwidth of the delta phase modulation scheme by a factor of two; i.e., from 3 bits to 6 bits, without requiring additional bandwidth.
Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A method to resolve phase within a PSK-encoded carrier (705), the method comprising
determining a desired phase shift to apply to a PSK-encoded carrier (705) in order to shift the PSK-encoded carrier back to a desired previous phase (1110);
calculating a compensatory phase shift (1300) by dividing the desired phase shift by a predetermined number of compensation cycles comprising several compensation cycles; and
applying the compensatory phase shift (1300) to the PSK-encoded carrier for the predetermined number of compensation cycles over a duration (1200) corresponding to a bit of the PSK-encoded signal;
wherein
the PSK-encoded signal (705) is progressively shifted to the desired previous phase (1110) over a duration (1200) corresponding to a bit of the PSK-encoded signal (705).

2. The method as disclosed in Claim 1, wherein the predetermined number of compensation cycles comprises the number of cycles in the PSK-encoded carrier that occur between a first phase shift (720) and a desired resolution point (1110).

3. The method as disclosed in Claim 1, wherein the predetermined number of compensation cycles comprises a predetermined constant value.

4. The method as disclosed in Claim 1, wherein the compensatory phase shift (1300) is applied to the PSK-encoded carrier (705) on nonconsecutive cycles of the PSK-encoded carrier (705).

5. The method as disclosed in Claim 1, wherein the compensatory phase shift (1300) is applied to the PSK-encoded carrier (705) on every tenth cycle of the PSK-encoded carrier (705).

## Patentansprüche

1. Verfahren zum Auflösen der Phase in einem PSK-kodierten Träger (705), wobei das Verfahren die Schritte umfasst:
Ermitteln einer auf den PSK-kodierten Träger (705) anzuwendenden gewünschten Phasenverschiebung, um den PSK-kodierten Träger in eine gewünschte vorherige Phase (1110) zurück zu verschieben;
Berechnen einer kompensierenden Phasenverschiebung (1300) durch Teilen der gewünschten Phasenverschiebung durch eine vorbestimmte Anzahl von Kompensationszyklen, die mehrere Kompensationszyklen umfassen;
Anwenden der kompensierenden Phasenverschiebung (1300) auf den PSK-kodierten Träger für eine vorbestimmte Anzahl von Kompensationszyklen während einer Dauer (1200) entsprechend einem Bit des PSK-kodierten Signals;
wobei
das PSK-kodierte Signal (705) progressiv zu der gewünschten vorherigen Phase (1110) während einer Dauer verschoben wird, die einem Bit des PSK-kodierten Signals (705) entspricht.

2. Verfahren nach Anspruch 1, wobei die vorbestimmte Anzahl von Kompensationszyklen die Anzahl von Zyklen in dem PSK-kodierten Träger entspricht, die zwischen einer ersten Phasenverschiebung (720) und einem gewünschten Auflösungspunkt (1110) auftreten.

3. Verfahren nach Anspruch 1, wobei die vorbestimmte Anzahl von Kompensationszyklen einen vorbestimmten konstanten Wert umfasst.

4. Verfahren nach Anspruch 1, wobei die kompensatorische Phasenverschiebung (1300) auf den PSK-kodierten Träger (705) in nicht aufeinanderfolgenden Zyklen des PSK-kodierten Trägers (705) angewendet wird.

5. Verfahren nach Anspruch 1, wobei die kompensatorische Phasenverschiebung (1300) auf den PSK-kodierten Träger (705) in jedem zehnten Zyklus des PSK-kodierten Trägers (705) angewendet wird.

## Revendications

1. Procédé de résolution de phase à l'intérieur d'une porteuse codée par codage PSK (705), le procédé comprenant :
la détermination d'un déphasage souhaité à appliquer à une porteuse codée par codage PSK (705) pour remettre la porteuse codée par codage PSK à une phase précédente souhaitée (1110) ;
le calcul d'un déphasage de compensation (1300) en divisant le déphasage souhaité par un nombre prédéterminé de cycles de compensation comprenant plusieurs cycles de compensation ; et
l'application du déphasage de compensation (1300) à la porteuse codée par codage PSK pendant le nombre prédéterminé de cycles de compensation au cours d'une durée (1200) correspondant à un bit du signal codé par codage PSK ;
dans lequel
le signal codé par codage PSK (705) est progressivement déphasé vers la phase précédente souhaitée (1110) au cours d'une durée (1200) correspondant à un bit du signal codé par codage PSK (705).

2. Procédé selon la revendication 1, dans lequel le nombre prédéterminé de cycles de compensation comprend le nombre de cycles dans la porteuse codée par codage PSK survenant entre un premier déphasage (720) et un point de résolution souhaité (1110).

3. Procédé selon la revendication 1, dans lequel le nombre prédéterminé de cycles de compensation comprend une valeur constante prédéterminée.

4. Procédé selon la revendication 1, dans lequel le déphasage de compensation (1300) est appliqué à la porteuse codée par codage PSK (705) pendant des cycles non consécutifs de la porteuse codée par codage PSK (705).

5. Procédé selon la revendication 1, dans lequel le déphasage de compensation (1300) est appliqué à la porteuse codée par codage PSK (705) tous les dix cycles de la porteuse codée par codage PSK (705).
